Europäisches Patentamt

European Patent Office

Office européen des brevets

Veröffentlichungsnummer: **0 274 677**

**A1**

# EUROPÄISCHE PATENTANMELDUNG

(21) Anmeldenummer: 87118321.6

(22) Anmeldetag: 10.12.87

(51) Int. Cl.⁴ **B23K 35/34** , B23K 35/30 , B23K 23/00 , //E01B11/52

(30) Priorität: 23.12.86 DE 3644106

(43) Veröffentlichungstag der Anmeldung:
20.07.88 Patentblatt 88/29

(84) Benannte Vertragsstaaten:
**AT FR GB IT**

(71) Anmelder: **Elektro-Thermit GmbH**
**Gerlingstrasse 65**
**D-4300 Essen(DE)**

(72) Erfinder: **Guntermann, Hans, Dr.**
**Augener Strasse 94**
**D-4300 Essen(DE)**

(74) Vertreter: **Perret, Georg, Dr.**
**Th. Goldschmidt AG Patentabteilung**
**Goldschmidtstrasse 100**
**D-4300 Essen(DE)**

(54) **Aluminothermisches Gemisch.**

⑤ Aluminothermisches Gemisch aus einem feinteiligen Gemenge von Eisenoxiden, Aluminium und Zusatzstoffen, wobei die Zusatzstoffe in Form eines homogenen Granulates mit einer mittleren Teilchengröße von 0,1 bis 6 mm enthalten sind.

Die Verwendung der Zusatzstoffe in Form eines homogenen Granulates vermindert die Gefahr der Entmischung von Schweißgemischen und gewährleistet eine gleichmäßige metallothermische Reaktion. Hierdurch wird die Ausbildung eines Schweißgutes gewünschter Zusammensetzung und geforderten Gefüges verbessert. Dies führt zu einer erhöhten Sicherheit, insbesondere bei der Verwendung des erfindungsgemäßen Gemisches bei der Schienenverbindungsschweißung.

EP 0 274 677 A1

Xerox Copy Centre

## Aluminothermisches Gemisch

Die Erfindung betrifft ein aluminothermisches Gemisch aus einem feinteiligen Gemenge von Eisenoxiden, Aluminium und Zusatzstoffen, wie Legierungsbildner, Dämpfungsmittel und/oder Aufkohlungsmittel.

Die Erfindung betrifft insbesondere ein aluminothermisches Gemisch für die Verbindungsschweißung von Schienen.

Bei der bekannten aluminothermischen Schienenverbindungsschweißung, bei der die mit einer Lücke verlegten und mit einer Gießform umgebenen Schienenenden durch aluminothermisch erzeugten Stahl aufgeschmolzen und miteinander verbunden werden, soll der als Schweißgut dienende aluminothermisch erzeugte Stahl in seinen Festigkeitseigenschaften dem Schienenstahl möglichst entsprechen.

Dieser Forderung tragen die bekannten - auch Schweißportionen genannten - aluminothermischen Gemische dadurch Rechnung, daß dem aus Aluminium und Eisenoxiden bestehenden Basisgemisch Legierungselemente, wie insbesondere Kohlenstoff, Mangan, Vanadium und Titan, beigegeben werden. Zur Dämpfung und Kühlung sind dem aluminothermischen Gemisch ferner Eisen bzw. Stahlschrott untermischt, wodurch gleichzeitig die Stahlausbeute erhöht wird. Als Stahlschrott wird dabei vorzugsweise sogenannter Nagelspitzenschrott verwendet, der kleinstückig bei der Herstellung von Nägeln anfällt.

Auch wurde vorgeschlagen, als Dämpfungsmittel statt der Nagelspitzen Graugußschrott zu verwenden. Hierdurch wurde das Schweißgut gleichzeitig auch mit unerwünschten Graugußelementen, wie z.B. Phosphor und Schwefel, angereichert, was sich auf das Schweißgut nachteilig auswirkt.

Entsprechend der Legierungstechnik weisen die bekannten aluminothermischen Gemische vier und mehr Komponenten und damit Nachteile auf, die sich insbesondere im Hinblick auf die Schweißung der heute verwendeten Schienenwerkstoffe auswirken.

So reagieren die bekannten aluminothermischen Gemische ungleichmäßig, was zu unterschiedlichen Verweilzeiten im Reaktionstiegel und - schwankenden Abbrandverlusten führt, wodurch Temperaturschwankungen und unterschiedliche chemische Zusammensetzungen der aluminothermisch erzeugten Stähle bedingt sind. Dies führt zu einem unterschiedlichen Verschleiß des Schweißgutes und damit zu Störstellen im Gleis und hat einen unruhigen Fahrzeuglauf sowie einen erheblichen Aufwand zur Beseitigung dieser Störstellen zur Folge. Da die heute vorzugsweise verwendeten Schienenstähle mit Zugfestigkeiten von 690 bis 880 N/mm² durch Kohlenstoffgehalte von 0,4 bis 0,82 % und Mangangehalte von 0,8 bis 1,7 % und ein dementsprechend vorwiegend perlitisch ausgebildetes Gefüge mit lamellarem Eisen-Carbid gekennzeichnet sind, ist für das Schweißgut eine möglichst gleichbleibende dem Schienenwerkstoff entsprechende Zusammensetzung und Gefügeausbildung anzustreben.

Es konnte festgestellt werden, daß für die unterschiedlichen Reaktionsabläufe insbesondere der Mischgrad der Schweißportion verantwortlich ist, wobei die Veränderung des Mischgrades im allgemeinen durch Entmischungen während des Transports und/oder der Handhabung erfolgt und wobei die Gefahr einer Entmischung um so größer wird, je mehr einzeln abgewogene Komponenten mit unterschiedlichen spezifischen Gewichten und Körnungen in der Mischung vorhanden sind.

Der Erfindung liegt die Aufgabe zugrunde, ein aluminothermisches Gemisch zu schaffen, welches nicht oder zumindest in wesentlich geringerem Umfang zur Entmischung neigt und damit die Erzeugung eines Schweißgutes mit erhöhter Reproduzierbarkeit der Zusammensetzung gewährleistet. Hierdurch soll insbesondere erreicht werden, daß das Gefüge des Schweißgutes dem Gefüge des Schienenwerkstoffes entspricht.

Der Erfindung liegt insbesondere die Aufgabe zugrunde, durch die Bereitstellung eines nicht entmischenden aluminothermischen Gemisches die Verkehrssicherheit der aluminothermisch erzeugten Schweißstelle noch weiter zu erhöhen.

Diese Aufgabe wird erfindungsgemäß dadurch gelöst, daß die Zusatzstoffe in Form eines homogenen Granulates mit einer mittleren Teilchengröße von 0,1 bis 6 mm enthalten sind.

Vorzugsweise sind in dem aluminothermischen Gemisch die Zusatzstoffe in Form eines homogenen Granulates einer mittleren Teilchengröße von 0,5 bis 3 mm enthalten.

Besonders bevorzugt sind die Zusatzstoffe in Form eines homogenen Granulates einer Siebfraktion von 0,5 bis 3 mm enthalten.

Unter dem Begriff Zusatzstoffe werden dabei Legierungsmetalle, wie z.B. Mn, Cr, Ni, V, Ti, die in reiner Form oder als Legierung, z.B. mit Fe eingesetzt werden können, Dämpfungsmittel, wie z.B. Fe oder Fe-Legierungen, sowie Aufkohlungsmittel, wie Kohlenstoff oder C enthaltende Metalle, Legierungen oder Carbide verstanden.

Das erfindungsgemäß enthaltene Granulat kann dadurch erhalten werden, daß man die Zusatzstoffe in eine homogene Schmelze überführt und in an sich bekannter Weise, z.B. mit Hilfe von Preßluft oder inerten Gasen, zu einem feinkörnigen Granulat verbläst. Vorzugsweise wird das erhaltene körnige Granulat anschließend so abgesiebt, daß es in einer Körnung von 1 bis 6 mm, vorzugsweise in einer Korngröße von 1 bis 3 mm vorliegt.

Wie oben ausgeführt, sind die heute vorzugsweise verwendeten Schienenstähle durch Kohlenstoffgehalte von 0,4 bis 0,82 Gew.-% und Mangangehalte von 0,8 bis 1,7 Gew.-% gekennzeichnet und weisen dementsprechend vorwiegend perlitisches Gefüge mit lamellarem Eisen-Carbid auf.

Soll das erfindungsgemäße Gemisch zur Verschweißung derartiger Schienen verwendet werden, ist das Gemisch gemäß vorliegender Erfindung da durch gekennzeichnet, daß ein Granulat, bestehend aus Kohlenstoff, Mangan und Eisen, in einer Menge enthalten ist, welche die Ausbildung eines perlitischen Gefüges in dem aluminothermisch erzeugten Stahl gewährleistet.

Vorzugsweise ist in dem Gemisch ein Granulat enthalten, welches aus 1,5 bis 3 Gew.-% Kohlenstoff, 8 bis 12 Gew.-% Mangan und 85 bis 90,5 Gew.-% Eisen besteht.

Das erfindungsgemäße aluminothermische Gemisch soll das aus den Zusatzstoffen bestehende Granulat in einer Menge von ca. 10 bis 25 Gew.-%, vorzugsweise 15 bis 20 Gew.-%, bezogen auf aluminothermisches Gemisch, enthalten.

Bei der Bemessung der das Granulat bildenden Zusatzstoffe ist zu beachten, daß sowohl dem durch die aluminothermische Reaktion bedingten Abbrand der Legierungselemente als auch der zusätzlichen Legierung des aus Eisen bestehenden Dämpfungsanteiles Rechnung getragen wird. Dabei muß die für die Schweißung erforderliche Gießtemperatur des aluminothermisch erzeugten Stahles gewährleistet sein. Das Verhältnis der Zusatzstoffe zueinander, die Menge an dämpfendem Eisen im Granulat sowie die benötigte Granulatmenge lassen sich durch einfache Vorversuche ermitteln. Dies ist dem Fachmann ohne weiteres erfinderisches Zutun möglich.

Die erfindungsgemäßen aluminothermischen Gemische bestehen somit aus dem erfindungsgemäß enthaltenen Granulat sowie den das Basisgemisch bildenden Komponenten Aluminium und Eisenoxid.

Das bekannte Basisgemisch kann z.B. aus 24 % Aluminium und 76 % Eisenoxid bestehen, wobei verschiedene Oxidationsstufen des Eisenoxids vorliegen können. Solche bekannten Gemische weisen z.B. Korngrößen von 0,5 bis 1,2 mm auf.

Die Zusammensetzung eines solchen erfindungsgemäßen Gemisches soll durch das nachfolgende Beispiel näher erläutert werden:

Sind Schweißportionen für die Verbindungsschweißung von z.B. Schienen mit einem Metergewicht von 50 bis 55 kg und mit 880 N/mm² Mindestzugfestigkeit (C = 0,6 % und Mn = 1,2 %) herzustellen und muß das Gewicht das Basisgemisches 10 kg betragen, so können in Abhängigkeit von den C-und Mn-Gehalten des Granulates dem Basisgemisch 18 bis 25 Gew.-%, d.h. 1800 bis 2500 g Granulat zugegeben werden.

Liegt in diesem Falle ein Granulat vor mit z.B. C = 2,5 %, Mn = 10 % und Fe = 87,5 %, wurde gefunden, daß zur Erzielung der gewünschten Schweißguteigenschaften 2300 g Granulat erforderlich sind. Das gesamte Gemisch, das die Schweißportion bildet, setzt sich also zusammen aus

2400 g Aluminium

7600 g Eisenoxid

2300 g Granulat.

In der Schweißportion sind dementsprechend 18,7 Gew.-% Granulat enthalten.

Der mit einem solchen Gemisch aluminothermisch erzeugte Stahl weist dann einen Kohlenstoffgehalt von ca. 0,6 % und einen Mangangehalt von ca. 1,2 % auf, wobei das Gefüge entsprechend dem Schienenstahl vorwiegend perlitisch ausgebildet ist.

Soll jedoch mit einem Granulat der angegebenen Zusammensetzung ein Schweißgut mit geringeren Kohlenstoff-und Mangangehalten erzeugt werden, so ist entsprechend weniger Granulat zu verwenden.

Werden noch höhere Festigkeiten als 890 N/mm² gewünscht, so kann z.B. auch ein Granulat verwendet werden, das noch geringe Mengen von z.B. Chrom, Vanadium oder Titan enthält. Diese zusätzlichen Legierungsanteile können jedoch auch in den erforderlichen geringen Mengen zusätzlich beigegeben werden, was zweckmäßig sein kann, wenn größere Mengen eines Granulates auf der Basis Kohlenstoff/Mangan/Eisen vorliegen und die Erschmelzung eines Sondergranulates sich nicht empfiehlt.

Die mengenmäßigen Zugaben zur Erzielung der gewünschten chemischen Zusammensetzung des Schweißgutes sind für jeden Fall durch einen Schweißversuch leicht zu ermitteln.

Das erfindungsgemäße aluminothermische Gemisch ermöglicht damit die Erzeugung eines Schweißgutes für die aluminothermische Schienenschweißung, das in seiner chemischen Zusammensetzung und Gefügeausbildung den verschiedenen zu verschweißenden Schienenstählen entspricht, wodurch insbesondere ein gleichmäßiges Verschleißverhalten von Schweißgut und Schienenwerkstoff und damit ein störungs-und wartungsfreies Gleis gewährleistet wird. Die Verwendung des Granulates reduziert der Forderung entsprechend ferner die Anzahl der Mischungskomponenten auf ein Minimum, was sowohl eine wirtschaftlichere Herstellung der Schweißportion bedingt als auch die Gefahr der Entmischung vermindert bzw. vermeidet und somit zu einem gleichmäßigen Reaktionsverhalten der Schweißportionen und einer gleichbleibenden Schweißgutqualität führt. Ein zusätzlicher Vorteil der erfindungsgemäßen aluminothermischen Gemische besteht in ihrem gleichmäßigen Abbrand, verglichen mit einem Schweißgemisch des Standes der Technik, welches als Zusatzstoff reinen Kohlenstoff enthält. Diese gleichmäßigere und ruhigere metallothermische Reaktion ist nicht nur metallurgisch von Bedeutung, sondern vermindert auch die Belastung des Schweißpersonals durch herausspritzende Teilchen des Schmelzgutes sowie aus dem reagierenden Gemisch austretende Dämpfe, welche insbesondere bei Schweißarbeiten in Tunnels oder U-Bahnen stören.

**Ansprüche**

1. Aluminothermisches Gemisch aus einem feinteiligen Gemenge von Eisenoxiden und Aluminium sowie Zusatzstoffen, wie Legierungsbildner, Dämpfungsmittel und/oder Aufkohlungsmittel, dadurch gekennzeichnet, daß die Zusatzstoffe in Form eines homogenen Granulates mit einer mittleren Teilchengröße von 0,1 bis 6 mm enthalten sind.

2. Aluminothermisches Gemisch nach Anspruch 1, dadurch gekennzeichnet, daß die Zusatzstoffe in Form eines homogenen Granulates einer mittleren Teilchengröße von 0,5 bis 3 mm enthalten sind.

3. Aluminothermisches Gemisch nach Anspruch 1, dadurch gekennzeichnet, daß die Zusatzstoffe in Form eines homogenen Granulates einer Siebfraktion von 0,5 bis 3 mm enthalten sind.

4. Aluminothermisches Gemisch nach einem oder mehreren der vorhergehenden Ansprüche, dadurch gekennzeichnet, daß ein Granulat, bestehend aus Kohlenstoff, Mangan und Eisen, in einer Menge enthalten ist, welche die Ausbildung eines perlitischen Gefüges in dem aluminothermisch erzeugten Stahl gewährleistet.

5. Aluminothermisches Gemisch nach Anspruch 4, dadurch gekennzeichnet, daß ein Granulat, bestehend aus 1,5 bis 3 Gew.-% Kohlenstoff, 8 bis 12 Gew.-% Mangan und 85 bis 90,5 Gew.-% Eisen, enthalten ist.

6. Aluminothermisches Gemisch nach einem oder mehreren der vorhergehenden Ansprüche, dadurch gekennzeichnet, daß das Granulat in einer Menge von 10 bis 25 Gew.-%, bezogen auf Gemisch, enthalten ist.

7. Aluminothermisches Gemisch nach einem oder mehreren der vorhergehenden Ansprüche, dadurch gekennzeichnet, daß das Granulat in einer Menge von 15 bis 20 Gew.-%, bezogen auf Gemisch, enthalten ist.

**Europäisches Patentamt**

**EUROPÄISCHER RECHERCHENBERICHT**

Nummer der Anmeldung

EP 87 11 8321

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 511 990 (ELEKTRO-THERMIT) <br> * Insgesamt * <br> --- | 1 | B 23 K 35/34 <br> B 23 K 35/30 <br> B 23 K 23/00 // <br> E 01 B 11/52 |
| A | EP-A-0 181 251 (COMPAGNIE FRANCAISE DE FORGES ET DE FONDERIES) <br> --- | | |
| A | DE-C- 898 989 (TH. GOLDSCHMIDT AG) <br> --- | | |
| A | DE-C- 851 887 (TH. GOLDSCHMIDT AG) <br> --- | | |
| A | US-A-1 430 667 (G.W. MERREFIELD) <br> --- | 1-7 | |
| A | GB-A- 931 419 (FOSECO) <br> --- | 1-7 | |
| A | GB-A- 369 843 (TH. GOLDSCHMIDT AG) <br> ----- | | |

**RECHERCHIERTE SACHGEBIETE (Int. Cl.4)**

B 23 K
B 22 D
C 22 B

Der vorliegende Recherchenbericht wurde für alle Patentansprüche erstellt

| Recherchenort | Abschlußdatum der Recherche | Prüfer |
|---|---|---|
| DEN HAAG | 25-03-1988 | MOLLET G.H.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)